# EUROPEAN PATENT SPECIFICATION

(11) **EP 1 498 323 B1**
(45) Date of publication and mention of the grant of the patent: **22.08.2007**
(21) Application number: 03254479.3
(22) Date of filing: 17.07.2003
(51) Int. Cl.: B60R 22/18, F16C 11/06

(54) **Buckle mounting arrangement**
Befestigungsvorrichtung für ein Sicherheitsgurtschloss
Système de fixation pour une boucle de ceinture de sécurité

(43) Date of publication of application: 19.01.2005
(73) Proprietor: KEY SAFETY SYSTEMS, INC., Sterling Heights, MI 48314 (US)
(72) Inventor: Smithson, Alan George, Corby Hill, Cumbria CA4 8QD (GB)
(74) Representative: W.P. Thompson & Co.

(56) References cited:
- WO-A-02/26532
- WO-A-97/25226
- WO-A-02/090786
- US-A- 4 132 434
- US-B1- 6 400 145

## Description

The present invention relates to a buckle mounting arrangement for a vehicle safety restraint seat belt.

The arrangement is particularly suitable for seat belts incorporating seat belt tension sensors (SBTS).

Seat belt tension sensors are required to assist in distinguishing between an adult occupant of a front passenger seat and a child seat occupying the seat, so as to control the deployment of the passenger airbag appropriately. They are compulsory according to the latest US legislation and are advisable in any jurisdiction.

A weight sensor is usually incorporated into a front passenger seat of a vehicle to monitor the weight of the occupant to detect whether a child seat has been employed or whether an adult has occupied the seat. However a weight sensor alone is unreliable since it will give an erroneous output if the seat belt is pulled very tight as is desirable in fixing child seats in place. Thus a seat belt tension sensor is also used to assist in discriminating more effectively. For example if an "adult weight" signal is monitored but the SETS detects a high belt tension signal then the apparent weight in the front seat is due to a child seat being fastened tightly rather than to an adult occupier, and the airbag can be correctly disabled to avoid deployment of the airbag which can cause serious injury to a child in the seat.

Such a seat belt tension sensor must be provided in the line of force of the seat belt to give an output proportional to the load in the seat belt and it is usually located between the belt buckle and the vehicle body. A typical sensor is described in US 6, 400, 145.

The SBTS must be connected to the buckle by a flexible connection which is strong enough to withstand the tensile and flexural loading whilst being suitably compact to fit within the limited space usually available. The connection has traditionally been done by a cable.

However such cables tend to have a limited flexure life, particularly when the distance between the buckle and the SBTS is short, and it contributes to high friction levels within the SBTS which can lead to sensor inaccuracies.

WO 02/090786 to Hultgren describes a guide for a ball joint at one end of an elongated element, wherein the a guide element projects out from the ball or from the ball supporting element engages with a groove in the all-accommodating body to prevent rotation of the elongated element about its own axis. WO 97/25226 to Alliedsignal describes a buckle mounting arrangement in which the buckle head is mounted on a ball joint attached to a mounting plate.

According to the present invention there is provided a ball and socket mounting arrangement for a buckle for a vehicle safety restraint seat belt, comprising: a rivet; a ball member comprising an attachment section and a ball section formed with a hole therethrough for receiving the rivet; a first and a second socket member, each having an attachment section and a socket section with a hole formed for receiving the rivet, wherein each of the attachment sections has at least one fixing hole and wherein, upon assembly of the mounting arrangement, the rivet holds the ball section between the first and second socket sections wherein the socket sections are semi-spherical arranged to surround the ball section.

According to a preferred embodiment the first and second socket members are each of the identical shape. This has advantages in manufacturing costs. They are made so that the socket section is a hollow half sphere and the attachment section asymmetrically arranged, ie is offset, extending to one side of a central line of the socket section. Thus when the two hollow half-spherical socket sections are turned to face each other, the two attachment sections lie laterally adjacent each other forming a symmetrical arrangement with two fixing holes and surrounding the ball section.

Preferably the ball and socket sections are formed by forging, casting, sintering or injection moulding depending upon the material selected. The rivet is advantageously a machined part but could also be a cold-formed part.

The fixing holes are preferably arranged to fix the mounting arrangement to the buckle on the one hand and to the SBTS on the other hand. More than one hole may be provided on each side.

Springs or plastic bellows can be used to bias the members to a central in-line position if required, thus to ensure alignment of a buckle with an SBTS.

Preferably a flattened or indented rebate is provided in the region of the rivet holding holes to allow the rivet head to sit flush with or hidden below the surface of the respective member.

For a better understanding of the present invention and to show how the same may be carried into effect, reference will now be made to the accompanying drawings in which:
Figure 1 is an exploded view of the disassembled parts of a mounting arrangement according to the present invention;
Figure 2 is an isometric view of the assembled arrangement of figure 1;
Figure 3 is a front view of the assembled arrangement of figure 2;
Figure 4 is a side view of the arrangement of figure 3;
Figure 5 is a cross-sectional view of the arrangement of figure 4.
Figure 6 is a view of a safety restraint seat belt buckle incorporating the mounting arrangement of figures 1 to 5;
Figure 7 is a cross-section through line A - A of figure 6 showing the mounting arrangement in detail;
Figure 8 is a cross-section through the seat belt buckle and mounting arrangement of figure 6;
Figure 9 is a cross-section through line A- A of figure 8 showing the mounting arrangement in detail.
Figure 10 is a front view of another embodiment of the mounting arrangement;
Figure 11 is an exploded view of the embodiment of figure 10.

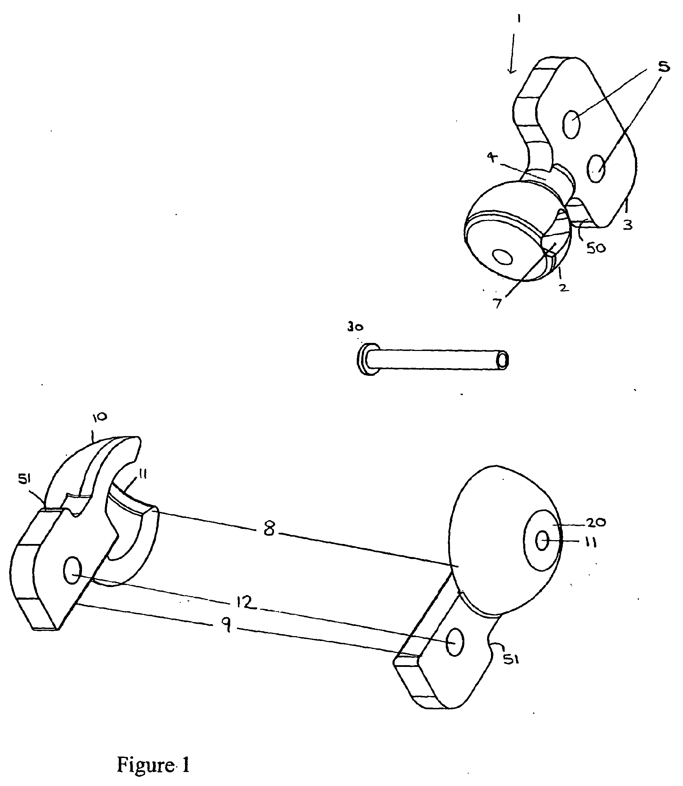

Figure 1 is an exploded view of the mounting arrangement according to the present invention. This comprises four pieces: a ball member 1, two identical socket members 10 and 20 forming parts of a socket joint, and a rivet 30 to hold the other members together.

The ball member 1 is formed as a one piece unit with a generally ball shaped section 2 forming part of the joint and an attachment section 3 for fastening the mounting arrangement to either one of a seat belt buckle or a seat belt tension sensor (SBTS). The attachment section 3 is a generally planar flange structure connected to the ball section 2 by a relatively narrow neck 4. The planar structure has two holes 5 formed through it for receiving rivets or bolts to attach to the buckle or SBTS. There is also a hole 7 lying in an indentation in the middle of the ball section 2 for receiving the rivet 30.

Each of the two socket members 10 and 20 comprise a semi-spherical hollow socket section 8 and a generally planar attachment section 9. The socket sections are arranged to surround the ball section 2, one on either side of it, and each has a hole 11 which aligns with the ball hole 7 and receives the rivet 30 in the assembled arrangement. The holes 11 are preferably set into a slight rebate to allow the head of the rivet to sit below the surface of the socket. The attachment sections 9 are generally planar and offset with relation to the socket sections 8 so that when the socket members are faced towards each other the attachment parts sit approximately adjacent each other and present two complementary fixing holes 12 for attachment to the other of a buckle or SBTS.

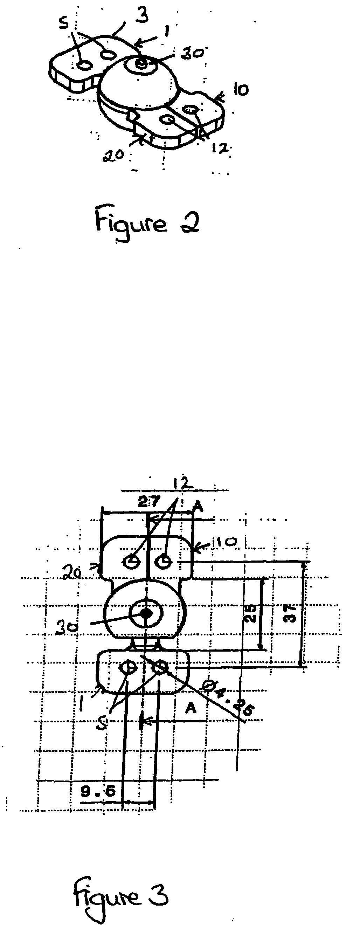

Figure 2 shows the four members 1, 10, 20, 30 of the mounting arrangement assembled so as to present a ball and socket joint in the middle of two attachment flanges each having two mounting holes 5 and 12. The whole structure is held together effectively by the rivet 30.

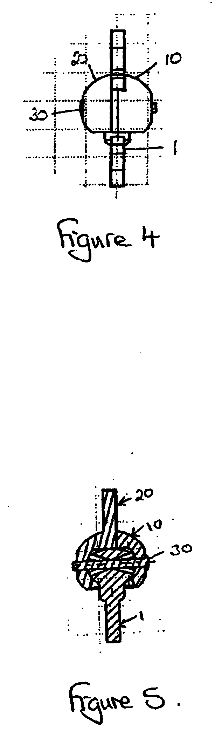

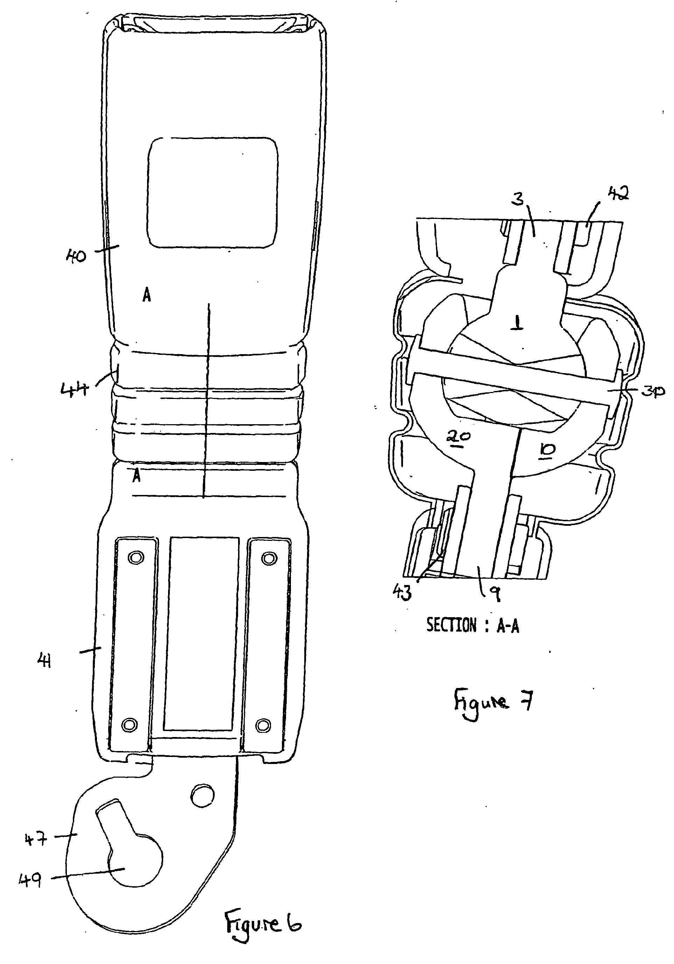

Figure 3 is a top plan view of the arrangement also showing the ball and socket joint between the attachment flanges with the mounting holes 5 and 12. The same arrangement is shown in plan view in figure 4 and in cross sectional view in figures 5, 7 and 9, which illustrates clearly how the rivet 30 passes through the other three members. The rivet 30 holds the assembly stable and limits rotation of the buckle around the insertion axis of the buckle tongue.

Figure 6 illustrates a seat belt buckle 40 connected to a SBTS 41 by means of the mounting arrangement comprising the ball member 1 and the two socket members 10 and 20 held together by the rivet 30, as illustrated in figure 7. In this embodiment the ball member 1 is attached to the buckle 40 by two bolts 42 passing through the holes 5 in the attachment section 3. The two socket members 10 and 20 are connected to the SBTS 41 by bolts 43, of which one is shown, passing through the holes 12 in attachment section 9 of socket member 20. The mounting arrangement is protected by a flexible cover 44 made for example of rubber or flexible plastics material. The cover 44 may be formed as a bellows and used as a biassing means.

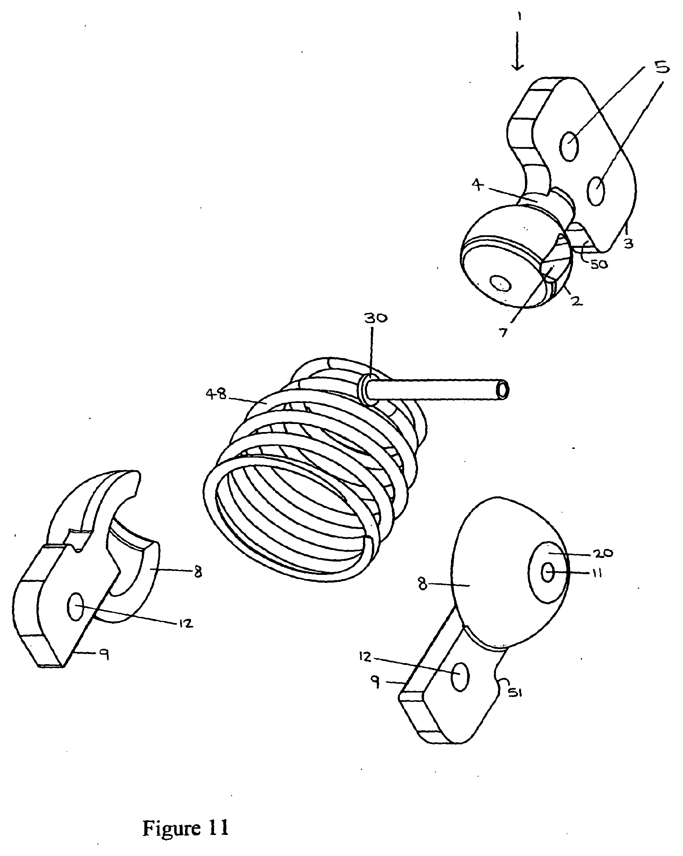

Alternatively a biassing spring may be incorporated, as shown in figure 10 which is a front view of the ball and socket joint has a spring 48 coiled around the two socket members 10 and 20 and held, on the one hand, by shoulders 50 of the planar attachment section 3 of the ball member 1, and on the other hand, by shoulders 51 of planar attachment section 9 of the socket members 10, 20. An exploded version of this embodiment is shown in figure 11 in which like parts are labelled with like reference numbers.

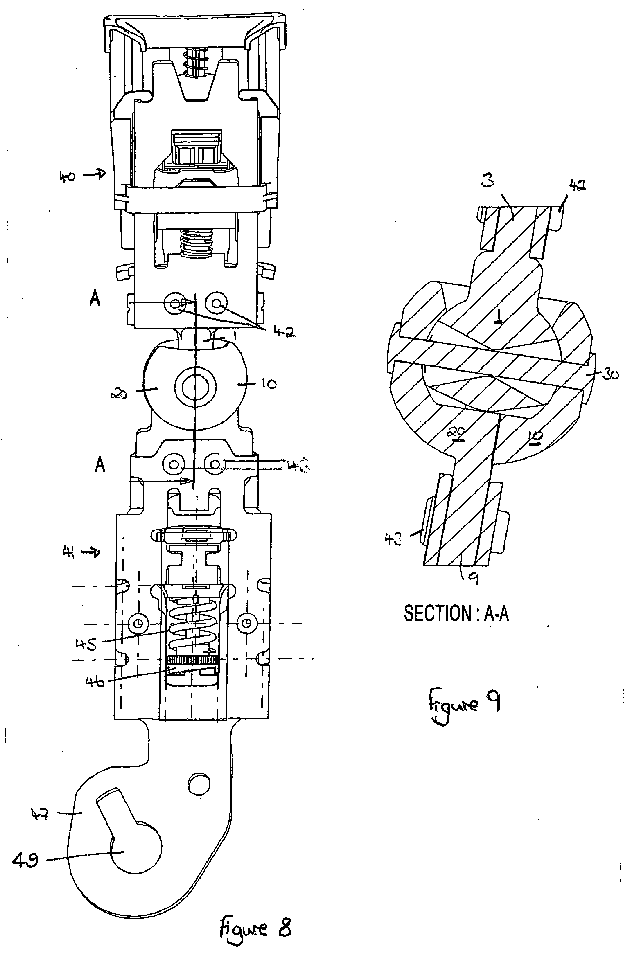

In figure 8 the buckle is shown in cross section so as to expose details of the SBTS 41. The SETS 41 has a spring 45 and a calibration dial 46 and operates in a manner known to persons skilled in the art.

In both figures 6 and 8 the SBTS is mounted to a fixed part of a vehicle by a bolt through hole 49 in the mounting figure 47.

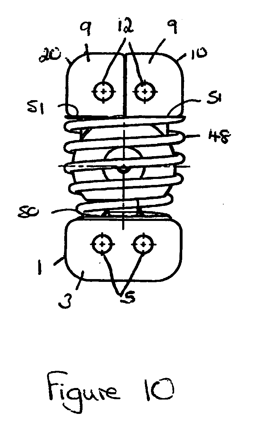

Figure 9 is a cross-section along line A-A of figure 8, showing the ball and socket part in more details including ball section 1, socket sections 10, 20 all held together by bolt 30, and attachment bolts 42, 43.

The arrangement is very compact and gives virtually friction free positioning of a buckle head relative to an SBTS within a 40 to 45 degree included angle cone. This arrangement also minimises rotation of the buckle about the tongue insertion axis thereby allowing ease of access to the buckle for locking and unlocking at all times.

## Claims

1. A ball and socket mounting arrangement for a buckle for a vehicle safety restraint seat belt, comprising:
a rivet (30);
a ball member (1) comprising an attachment section (3) and a ball section (2) formed with a hole (7) therethrough for receiving the rivet (30);
a first (10) and a second (20) socket member, each having an attachment section (9) and a socket section (8) with a hole (11) formed for receiving the rivet (30), wherein each of the attachment sections (3,9) has at least one fixing hole (5,12) and wherein, upon assembly of the mounting arrangement, the rivet (30) holds the ball section (2) between the first and second socket sections (8), wherein the socket sections (8) are semi-spherical arranged to surround the ball section (2).

2. A mounting arrangement according to claim 1 wherein the first and second socket sections (8) are each of identical shape.

3. A mounting arrangement according to claim 2 wherein each socket member (10,20) is asymmetrical.

4. A mounting arrangement according to claim 3 wherein the first and second socket sections (8) are each formed as a hollow half sphere and the attachment section (9) is offset to one side of a central line of the socket section (8) so that when the two hollow half spherical socket sections (8) face each other to form a sphere surrounding the ball section, then the two attachment sections (9) lie laterally adjacent each other forming a symmetrical arrangement.

5. A mounting arrangement according to any one of the preceding claims wherein the ball and socket members (1, 10, 20) are formed by forging, casting, sintering or injection moulding.

6. A mounting arrangement according to any one of the preceding claims wherein the rivet (30) is a machined part or a cold formed part.

7. A mounting arrangement according to any one of the preceding claims wherein the fixing holes (5, 12) are arranged to fix the mounting arrangement to a buckle on the one hand and to a seat belt tension sensor on the other hand.

8. A mounting arrangement according to any one of the preceding claims comprising means to bias the members (1, 10, 20) to a central in-line position.

9. A mounting arrangement according to claim 8 wherein the bias means comprises a spring.

10. A mounting arrangement according to claim 8 wherein the bias means comprises plastic bellows.

11. A mounting arrangement according to any one of the preceding claims wherein a flattened or indented rebate is provided in the region of the rivet holding holes (7, 11) to allow the rivet (30) to sit flush with or hidden below the surface of the ball and socket members (1, 10, 20).

## Patentansprüche

1. Befestigungsanordnung mit Kugel und Gelenkpfanne für ein Schloss für einen Fahrzeugsicherheitsgurt, umfassend:
eine Niete (30);
ein Kugelelement (1), das einen Anbringungsabschnitt (3) und einen Kugelabschnitt (2) umfasst, der mit einem Loch (7) zum Aufnehmen der Niete (30) da hindurch ausgebildet ist;
ein erstes (10) und ein zweites (20) Gelenkpfannenelement mit jeweils einem Anbringungsabschnitt (9) und einem Gelenkpfannenabschnitt (8) mit einem zum Aufnehmen der Niete (30) ausgebildeten Loch (11), wobei jeder der Anbringungsabschnitte (3, 9) wenigstens ein Befestigungsloch (5, 12) hat und wobei nach der Montage der Befestigungsanordnung die Niete (30) den Kugelabschnitt (2) zwischen dem ersten und dem zweiten Gelenkpfannenabschnitt (8) hält, wobei die Gelenkpfannenabschnitte (8) halbkugelförmig, zum Umgeben des Kugelabschnitts (8) angeordnet sind.

2. Befestigungsanordnung nach Anspruch 1, bei der der erste und der zweite Gelenkpfannenabschnitt (8) jeweils die gleiche Form haben.

3. Befestigungsanordnung nach Anspruch 2, bei der jedes Gelenkpfannenelement (10, 20) asymmetrisch ist.

4. Befestigungsanordnung nach Anspruch 3, bei der der erste und der zweite Gelenkpfannenabschnitt (8) jeweils als eine hohle Halbkugel ausgebildet sind und der Anbringungsabschnitt (9) nach einer Seite von einer Mittellinie des Gelenkpfannenabschnitts (8) versetzt ist, so dass dann, wenn die zwei hohlen halbkugelförmigen Gelenkpfannenabschnitte (8) einander gegenüberliegen, um eine den Kugelabschnitt umgebende Kugel zu bilden, die zwei Anbringungsabschnitte (9) eine symmetrische Anordnung bildend seitlich nebeneinander liegen.

5. Befestigungsanordnung nach einem der vorhergehenden Ansprüche, bei der die Kugel- und Gelenkpfannenelemente (1, 10, 20) durch Schmieden, Gießen, Sintern oder Spritzgießen hergestellt sind.

6. Befestigungsanordnung nach einem der vorhergehenden Ansprüche, bei der die Niete (30) ein spanhebend bearbeitetes Teil oder ein kalt geformtes Teil ist.

7. Befestigungsanordnung nach einem der vorhergehenden Ansprüche, bei der die Befestigungslöcher (5, 12) zum Fixieren der Befestigungsanordnung einerseits an einem Schloss und andererseits an einem Sicherheitsgurtspannungssensor angeordnet sind.

8. Befestigungsanordnung nach einem der vorhergehenden Ansprüche, die ein Mittel zum Vorspannen der Elemente (1, 10, 20) auf eine zentrale in Reihe liegende Position umfasst.

9. Befestigungsanordnung nach Anspruch 8, bei der das Mittel zum Vorspannen eine Feder umfasst.

10. Befestigungsanordnung nach Anspruch 8, bei der das Mittel zum Vorspannen einen Plastikfaltenbalg umfasst.

11. Befestigungsanordnung nach einem der vorhergehenden Ansprüche, bei der in der Region der Nietenhaltelöcher (7, 11) eine abgeflachte oder vertiefte Aussparung bereitgestellt ist, damit die Niete (30) bündig mit oder versteckt unter der Oberfläche der Kugel- und Gelenkpfannenelemente (1, 10, 20) liegen kann.

## Revendications

1. Dispositif de montage à rotule et logement de rotule d'une boucle pour une ceinture de sécurité d'un dispositif de retenue de sécurité d'un véhicule, comprenant :
un rivet (30);
un élément de rotule (1) comprenant une section de fixation (3) et une section de rotule (2) comportant un trou (7) la traversant pour recevoir le rivet (30);
un premier (10) et un deuxième (20) élément de logement de rotule, comportant chacun une section de fixation (9) et une section de logement de rotule (8) avec un trou (11) destiné à recevoir le rivet (30), chacune des sections de fixation (3, 9) comportant au moins un trou de fixation (5, 12), le rivet (30) retenant, lors de l'assemblage du dispositif de montage, la section de rotule (2) entre les première et deuxième sections de logement de rotule (8), les sections de logement de rotule (8) étant agencées de manière semi-sphérique pour entourer la section de rotule (2).

2. Dispositif de montage selon la revendication 1, dans lequel les première et deuxième sections de logement de rotule (8) ont chacune une forme identique.

3. Dispositif de montage selon la revendication 2, dans lequel chaque élément de rotule (10, 20) est asymétrique.

4. Dispositif de montage selon la revendication 3, dans lequel les première et deuxième sections de logement de rotule (8) ont chacune la forme d'une demi-sphère creuse, la section de fixation (9) étant décalée vers un côté d'une ligne médiane de la section de logement de rotule (8), de sorte que lorsque les deux sections de logement de rotule semi-sphériques creuses (8) se font face pour former une sphère entourant la section de rotule, les deux sections de fixation (9) sont latéralement adjacentes, formant un agencement symétrique.

5. Dispositif de montage selon l'une quelconque des revendications précédentes, dans lequel les éléments de rotule et de logement de rotule (1, 10, 20) sont formés par forgeage, coulée, frittage ou moulage par injection.

6. Dispositif de montage selon l'une quelconque des revendications précédentes, dans lequel le rivet (30) est constitué par une pièce usinée ou une pièce à formage à froid.

7. Dispositif de montage selon l'une quelconque des revendications précédentes, dans lequel les trous de fixation (5, 12) sont agencés d'une part de sorte à fixer le dispositif de montage sur une boucle et d'autre part sur un capteur de la tension de la ceinture de sécurité.

8. Dispositif de montage selon l'une quelconque des revendications précédentes, comprenant un moyen pour pousser les éléments (1, 10, 20) vers une position centrale en ligne.

9. Dispositif de montage selon la revendication 8, dans lequel le moyen poussoir comprend un ressort.

10. Dispositif de montage selon la revendication 8, dans lequel le moyen poussoir comprend des soufflets en plastique.

11. Dispositif de montage selon l'une quelconque des revendications précédentes, dans lequel une feuillure aplatie ou entaillée est formée dans la région des trous de retenue du rivet (7, 1), de sorte que le rivet (30) peut affleurer la surface des éléments de rotule et de logement de rotule (1, 10, 20) ou être caché au-dessous de celle-ci.
